# EUROPEAN PATENT SPECIFICATION

(11) **EP 3 513 885 B1**
(45) Date of publication and mention of the grant of the patent: **07.10.2020**
(21) Application number: 18208147.1
(22) Date of filing: 17.06.2013
(51) Int. Cl.: B09B 3/00, F27B 7/20, F27B 7/34, F27B 7/36, F27D 17/00, F27D 99/00

(54) **FACILITY AND PROCEDURE FOR TREATMENT OF A SOLIDIFICATE**
ANLAGE UND VERFAHREN ZUR BEHANDLUNG EINES SOLIDIFIKATS
INSTALLATION ET PROCÉDURE DE TRAITEMENT D'UN SOLIDIFICAT

(30) Priority: 07.06.2013 HR 20130502
(43) Date of publication of application: 24.07.2019
(62) Divisional of application: 13752662.0
(73) Proprietor: ECOGLOBAL SERVICES Limited, Road Town, Tortola, VG 1110, BVI (VG)
(72) Inventor: SPANOVIC, Milli, 10000 Zagreb (HR)
(74) Representative: Paustian, Othmar

(56) References cited:
- EP-A1- 1 930 303
- EP-A2- 1 316 536
- WO-A1-2009/095121
- WO-A1-2009/110356
- WO-A1-2012/117159
- WO-A1-2012/176161
- DE-A1-102011 050 677
- DE-T2- 69 027 302
- US-A1- 2010 028 821

## Description

### Field of the Invention

Facility and construction of device that define technical and technological solution for complete ecological and energy management of communal and industrial waste with emphasis on physical and chemical treatment using solidification and reactant based on calcium.

This invention falls into the following areas:
B01 B; B01 D; BOS B; B04 B; B07 B, F26 B; F28 F, and also:
E04 B (C03, C04), E04 C; E04 D; E04 F; B29 G, and: G21 F and G21 K.

### DESCRIPTION

### Background of the Invention

Treatment of waste with solidification and additives based on calcium is a known and successful procedure. It achieves its ecological goals regarding conditioning as well as physical and chemical treatment of communal and industrial waste.

Such procedures reduce the harmfulness of material for at least one MAC (maximum allowable concentration) level. Also, the material is transformed into a dry, powdery solidificate with more favourable chemical and physical characteristics.

Often, the way to conduct solidification is with reactants based on calcium: Ca(OH)₂, CaO, CaC0₃. MgO. Ca(OH)₂ + CaO is typically a good and cost-effective way to achieve solidification. Some sorts of waste require only CaO, while others need only Ca(OH)₂. We select reactants by analysing the waste.

We do not use these procedures when it comes to high levels of hard metals (lead Pb; chromium Cr; zinc Zn; cadmium Cd) and high levels of TOC (total organic carbon). Soluble substances in water still present a risk to a successful outcome, while nitrogen compounds stay barely within accepted levels.

Also, solidificate treated with less calcium oxide contains high levels of moisture, which decreases its quality and further industrial use.

These shortcomings are based on:
a) Incomplete dissociation in reactor's unit. This occurs at the start of exothermic reaction created by hydration of calcium oxide. The exothermic reaction is not completed because it requires more time.
b) Accumulation of solidificate (in container or a silo). Solidificate is not sufficiently treated; it is sticky and it hardens with time, which makes its removal from container difficult.
c) Today's facilities are usually unable to incorporate more options regarding quality of output product.
d) Cost is often the reason why waste is not treated this way, but instead by using other methods that do not meet basic ecological criteria.

Upon treatment we face the problem of storage or further use of big quantities of solidificate. It is difficult to find companies interested in its use. And, although chemical analysis is satisfactory, it is very expensive to dispose of solidificate at the communal waste dump. It is important to reduce the amount of additives since they are the most costly part of treatment. This invention addresses described shortcomings and makes the procedure more cost-effective. We can select the type of solidificate best suited for intended further use or chose a procedure where solidificate is not a final output product, but instead we get a minimal amount of ash.

Solidification (transformation of liquid, oily and muddy materials into powder) is the most common treatment of materials when it comes to ecological conditioning of dangerous industrial and / or communal waste. Today, dangerous waste with high content of hydrocarbon is frequently treated by solidification or incineration. Although solidification is a simpler and cheaper procedure, many opt for incineration because such waste contains certain amounts of energy, which improves cost-effectiveness of incineration.

New regulations and European directives do not support incineration of such waste because of uncontrolled air pollution (dioxins, furans, hydrocarbons, nitrogen compounds, etc.) Other procedures that need other additives (olein and stearin acids, hard acids, fatty acids) are no longer in frequent use because of their price and large quantities of solidificate coming from the process.

EP 1 316 536 A2 describes a process for transforming a solidificate containing Ca(OH)₂, CaCO₃, Ca(OH)₂ + MgCO₃ into calcium oxide, comprising the following steps: roasting the solidificate in a rotary kin, thereby separating steam and the gaseous contents from the remaining content and obtaining calcium oxide; providing the rotary kiln with the roasting temperature by a burner supplied with hot air from a cyclone and with fuel and fresh air; discharging the calcium oxide from the rotary kiln via the burner; supplying a cyclone with hot air from the rotary kiln, the hot air containing the steam and the gaseous contents and going through the cyclone into a filtering unit to be cleansed; supplying the burner with a first part of the hot air; supplying a heat exchanger with a second part of the hot air from the cyclone; and collecting the ash left in the cyclone by an ash collector.

DE 690 27 302 T2 discloses a method for preheating scrap iron by pyrolysis of resinous residues contained therein, with total recovery of their energy content and using a cyclone separator.

It is not well-known whether any of the following is being utilised as described:
a) Heat energy from the process is reintroduced back into the same process to gain total energy required for treatment of waste
b) Recirculation system where the solidificate with increased heat energy, attained at the end of the first phase of the process, is brought back into the process to raise the overall energy needed to obtain the final product - a high quality solidificate
c) Solar energy is utilised within the overall heat energy balance required for treatment of waste
d) Option to chose the quality of the final product as well as define the shape of the final solidificate, depending on its further industrial use (wider choice concerning the wanted transformations)
e) Attained solidificate is regenerated by a thermic and chemical procedure and transformed back into calcium oxide. This continues the treatment without additional calcium oxide The invention is defined by the independent claims. Preferred embodiments are defined in the dependent claims.

### FIGURES

### Brief description of the drawings

Invention is illustrated as follows:
Illustration 1: Layout of the facility
Illustration 2: Blueprint of the facility
Illustration 3: Regenerator for obtaining calcium oxide and ash from solidificate

Drawings are marked as follows:
A. Entry point for waste
B. Entry point for additives (Ca(OH)₂)
C. Entry point for additives CaO
D. Entry point for additives (filter sediments)
E. Exit point for neutralised product
   1. Waste Transporter
   2. Heat Injector
   2a. Ultrasound Device for homogenisation
   3. Ozone Generator
   4.
   Motor for first reactor's line 5.
   First reactor's line 6. Parallel dissociation devices with magnetic field
   6a. Device for creation of magnetic field
   7. Heat output for first reactor's line
   8. Motor for second reactor's line
   9. Device for chopping up particles
   10. Triple rotating device for chopping
   11. Second reactor's line
   12. Parallel oxide encapsulators
   13. Motor for third reactor's line
   14. Heat output for second reactor's line
   15. Third reactor's line
   16. Parallel reduction encapsulators
   17. Motor for fourth reactor's line
   18. Heat output for third reactor's line
   19. Fourth reactor's line
   20. Parallel redox encapsulators
   21. Heat output for fourth reactor's line
   22. Integral system for physical and chemical definition of output product
   23. Motor for output conveyor
   24. Output point for product transportation (final material or material to be reintroduced to the process)
   25. Output conveyor for final product
   26. Heat collection system for all reactors' units
   27. Tower with exchange and distribution of heat
   28. Accumulation directing device for heat
   29. Insulated pipeline for heat placed towards incoming waste
   30. Solar panel for absorption of the sun's energy (heat)
   31. Output point for steam and gas
   32. Filtration system for cleansing of gas, steam and particles (Scrubber)
   33. Facility, vertical construction
   34. Facility, horizontal construction
   a, b, c, d. Pipeline for heat placed towards heat collection system for all reactors' units
   35. Transporter for solidificate
   36. Regenerator's rotary kiln
   37. Burner chamber
   38. Cyclone
   39. Regenerator's Heat exchanger
   40. Motor for rotary kiln
   41. Ash collector

I. Point of entry of solidificate into regenerator
II. Entry point of hot air from cyclone
III. Entry point for fuel
IV. Entry point for fresh air
V. Exit point for calcium oxide
VI. Exit point for hot air

### SUMMARY OF THE INVENTION

This invention focuses on communal or industrial waste. Such waste usually contains chemical compounds with carbon, different compounds with hard metals, alkyl compounds, alkaline and / or acidic content as well as numerous nitrogen, chlorine and other compounds. Waste undergoes preparation to become a material of equal granulation (0-20 mm). Concerning chemical content, a special attention is given to contents based on chlorine, ammonia, nitrogen and phosphorus.

Useful components are being recycled (metal, glass, plastic, paper) and the rest is chopped up and crushed to become a material awaiting treatment.

Best way to describe this invention is by explaining the functions of specific parts:
a) Tower with exchange and distribution of heat (27)
During the process, hot gases are created in all four reactors' lines. Exchange of heat in the tower happens as these hot gases move inside the tower's inner pipe. Clean air moves through the tower and absorbs the heat via convection from the hot pipe and so it cools down the gases. Accumulation directing device for heat (28) moves the clean air, now heated, towards the Heat Injector.
b) Heat Injector (2)
Air pump is installed in the pipeline and placed in front of Injector, Air pump blows in the warm air and that is how the warm air comes into direct contact with incoming waste.
c) Ozone Generator (3)
Ozone circulates in 1-2 g/s and decomposes organic contents. Organic contents break down, molecular and physical water separate, physical characteristics (colour, granulation) change. This contributes to better molecular dissociation in Second reactor's line.
d) Ultrasound Device for homogenisation (2a)
We use the Ultrasound Device for homogenisation when it comes to liquid waste. We use the device to achieve the same density and the same physical and chemical characteristics throughout the liquid mixture.
e) Parallel dissociation devices (6)
Dissociation device conducts the initial ion separation from molecule's atoms into anions (especially OH⁻) and cations (especially H⁺). This is followed by ionic dissociation of hard metals and carbon portion of organic fraction. This depends on the surrounding available energy and negative electric potential of ions in dissociated parts.
(Author pointed out this function with a Patent that is currently being examined, HR/P20120417A)
f) Device for creation of magnetic field (6a)
An electromagnet is placed underneath the reactor's line and it creates a magnetic field. Electromagnet has a rounded shape as it follows the curvature of reactor's external surface. (Author has a registered Patent pertaining to this: HR/P20080004)
g) Device for chopping up particles (9)
Device for chopping up particles is placed between the first and second reactors' lines. It serves as a so-called micronizer as it chops up the particles. Parallel oxide encapsulators (12) are inside the second reactor's line (11). Particles need to be chopped up to less than 10 µm. To achieve this, we use Triple rotating device for chopping (10) with different rotation speeds (from 200 to 300 °/min)
h) Parallel pairs of encapsulators (12, 16, 20)
Encapsulated performs the function of pozzolamic impact on atoms coming from dissociated molecules under the conditions of vacuum space. Vacuum space is located inside the whirlwind surrounded by steam and gases. This is followed by encapsulation of cations (especially heavy metals and non-carbons of the organic fraction) which depends on available surrounding energy.
Same Author pointed this out in almost all of his Patent Applications, which are being processed: HR/P20090092A; HR/P20090425A; HR/P20100575A. The main differences in this Application are the redox encapsulators (20) that stabilise oxidized and reduced compounds. Otherwise, when it comes to large capacities of treatment, influence of oxidation is too great and so pH of the final product can be too high which ruins the analysis of leaching.
i) Filtration system (32)
Filtration system for cleansing of gas, steam and particles consists of:
- Water Filter - where ammonia compounds, chlorine compounds and phosphorus compounds as well as C0₂ gas and particles are collected at the bottom of filter as salts and mud. Ventilator directs gases and water steam toward Scrubber. Scrubber is a device for chemical treatment of gaseous content. Sediment containing mostly hydroxide is taken out, shaped as mud, and returned back into the process.
   Increased temperature of the filter is added to the Heat exchange system as a part of total accumulated heat energy needed for treatment.
- Scrubber uses acidic medium (usually 1-2% H₂S0₄) to cleanse gasses and
   steam, leaving not a trace of ammonia. Gasses exiting scrubber consist of water steam, C0₂ and N₂. Mud in the baggy filter and scrubber contain sulphate salts and together with mud from water filter, they are reintroduced to the process. Increased temperature inside scrubber is added to the Heat exchange system as a part of total accumulated heat energy needed for treatment.
- Baggy filter collects particles on its semi-permeable, perforated membrane, while gases continue toward water filter and scrubber. Particles contain mainly calcium hydroxide and partially elements separated from waste mass.

j) Solar panel for absorption of the sun's energy (heat) (30)
We use solar panel to add heat energy when treating mud with small or no inner caloric value (HHV, LHV). Heat energy obtained by the solar panel is transferred via convection into a heating system for input waste (A). This takes place before or after the Ozone generator (3) depending on the sort of treated waste.
A small ozone exposure (1 g/s) is sufficient for waste with high portion of organic compounds. Transformation, oxidation, physical and chemical decomposition of organic compounds happens quickly regardless of temperature differences.
But, industrial muddy material containing complex carbon compounds requires increased energy. Material's insufficient inner energy is recouped by heat energy obtained during treatment using Heat exchanger and including heat energy gained by Solar panel.
k) Physical and chemical definition of final product (E)
Final product is defined on output transporters (24, 25). One transporter is for basic treatment without additional changes to the final product. Second output is designed for additional integration, including special additives, depending on product's further use. Product (E) leaving the facility after basic treatment is a so-called Neutral product. It has standard qualities expected from solidificate (according to Patent HR/P20100575 A2 by same Author).
Adjusted final product can be the one intended for production of silicate granulates (Patent P20100300, same Author) or gascement (Patent HR/P20100325, same Author).
l) Regenerator's rotary kiln (36)
Solidificate, as the final product of basic treatment, is taken by transporter (35) into Regenerator's rotary kiln (36). We use a thermochemical procedure with burner (37) to break down solidificate. We use Heat exchanger (39) to distribute heat for further use, Solidificate to be transformed into calcium oxide has the following content:

| | | |
|---|---|---|
| Ca(OH)₂: 63 % → | change into CaO: | (56/74 · 0.63) = 47.7 % |
| CaC0₃: 24 % → | | (56/100 · 0.24 = 13.4 % |
| Ca(OH)₂ + MgC0₃: | 8.5 % → | (56/74 · 0.085) -1 = 5.4 % |
| The Rest: | 4.5 % → | 0 % |

This is a molecular and stoichiometric calculation and so the calculation is shown in parentheses.
By roasting such solidificate, we obtain calcium oxide in amount of≈ 66.5% as related to the amount of solidificate. Purity is CaO > 84%. Such calcium oxide is of sufficient quality for further continuous treatment of waste.
We roast solidificate in Regenerator's rotary kiln (36). We apply temperature needed for separation of water steam from calcium hydroxide (520-700 °C) as well as separation of secondary gaseous fractions from the remaining content. Calcium hydroxide is transformed into calcium oxide during this phase.
After the separation of gaseous contents, hot powdery calcium oxide is transported by conveyor or pneumatic pipeline into silo for further use in continuous treatment of waste. Gaseous content and steam go through a cyclone into the filtering unit to be cleansed. This leaves sedimentary ash, which along with temperature required for decomposition of calcium hydroxide, defines roasting process, not burning or incineration.
So-called Calciner is a device for regeneration of solidificate. We use it to obtain calcium oxide as follows: transporter (35) takes solidificate to be roasted and then decomposed in regenerator's rotary kiln (36).
Fuel combustion (gas, mazut, additives to fuel with fresh air) in Burner (37) raises the roasting temperature. And during the passage through rotary kiln, calcium oxide (V) is being released in amount with which calcium created calcium hydroxide as well as calcium carbonate and magnesium carbonate. Loss of calcium js relatively small and it does not go over 1 %.
Ash (41) collects in cyclone, while Heat exchanger (39) distributes hot air (VI). Some of hot air goes into burner to increase the use of heat energy.
m) Function of ozone is shown by describing its influence on organic contents in waste. Here are the most common chemical reactions:
In reaction with nitrogen, chlorine and carbon:

NO + O₃ → NO₂ + O₂

C + 2O₃→ CO2 + 2O₂

NO₂ + O₃→ NO₃ + O₂

2NO₂ + 2ClO₂ + 2O₃→ 2NO₂ClO₄ + O₂

2NH₃ + 4O₃→ NH₄ NO₃ + 4O₂ + 2H₂O

3SnCl₂ + 6HCl₃ + O₃ → 3SnCl₄ + 3H O

(NH₂)₂CO + N₂ + O₃ → CO₂ + 2H₂O

CN⁻ + O₃→ CNO⁻ + O₂

In reaction with sulphur:

S + O₃ + H₂O → H₂SO₄

3SO₂+3H₂O+O₃→ 3H₂SO₄

H₂S + O₃ → S + O₂ + H₂O

3H₂S + 4O₃ → 3H₂SO₄

PbS+ 40₃→ PbSO₄ + 4O₂

In reaction with metals, alkaline compounds and ammonia:

2Mn²⁺ + 20₃ + 4H₂0→ 2Mn(OH)₂ + 20₂ + 4H⁺

KO₂ + O₃→ KO₃ + O₂

2KOH +. 50₃→ 2KO₃ + 5O₂ + H₂O

3Ca + 10NH₃ + 6O₃ → Ca 6NH₃ + Ca(OH)₂ + Ca(NO₃)₂ + 2NH₄O₃ + H₂ + 2O₂

Ozone breaks down organic carbon in amount of 0.55 g/s. If material has≤ 50% of organic content, ozone will penetrate the organic content in amount of 3 kg/h. Ozone will get through the organic content in amount of 0.55 g/s (ozone 0.02%) when the treatment capacity is 1.5 kg/s (5.4 t/h). The remaining ozone quickly transforms into O₂ This procedure lowers the amount of calcium oxide needed for treatment.

### EMBODIMENTS

### Detailed description

Material awaiting treatment (communal and / or industrial waste) is chopped up to equal granulation and analysed. We calculate for possible chemical reactions during different phases of treatment. The most important data relates to the physical size of reaction (endothermic and exothermic reactions; increases of temperature, pressure and volume; strength of a chemical reaction (volatile, intense, slow or fast); release of gases (specifically chlorine, ammonia, C0₂ and phosphine); concentration of potentially explosive or combustible gaseous contents).

We consider inner caloric values of certain substances, release of energy needed for the process (enthalpy) as well as either deficiency or surplus of total required energy. We ascertain chemical contents of waste and physical portion of treatment to define transformations inside the reactors' lines. The most important process happens in the second reactor's line: contact with calcium oxide and exothermic increase of temperature, which develops with 1.18 MJ/kg CaO. Addition to CaO is calculated based on the energy balance, on the total required energy and on the level of moisture in material.

Besides the outside atmospheric conditions, these also take part in total available energy (process thermodynamics):
a) Inner energy of input material
b) Energy of exothermic reaction, CaO
c) Specific enthalpy
d) Vacuum energy
e) Preservation of energy (losses)
f) Roasting of solidificate, heat energy

This total energy in MJ/kg is compared to energy needed to transform waste into a dry solidificate. Level of moisture in solidificate has to be <10%. Temperature in reactors' lines has to be 100-125 °C. And temperature of output material has to be 75-85 °C. Losses pertain to energy taken within the process (endothermic reactions) and heat lost through facility's openings and surface.

Energy balance tells us the minimal amount of CaO required for a successful process. This in turn tells us how much energy we can take from other sources to lower CaO content and still keep the process complete energy-wise.

Other sources for replaceable energy are:
a) Preparation of material
   - Ozone reaction and decomposition of organic substances (1-2 g/s for material with >25% of organic content)
   - Mixture homogenisation using Ultrasound
   - Magnetic ionisation to boost dissociation and increase energy of chemical reaction
b) Energy gained through the process
   - Attained solidificate now serves as additive to material (up to 30%)
   - Recirculation of steam and gases using Heat exchanger
   - Sun's energy (heat) using a Solar panel
   - Good insulation for facility
c) Speed of process (treatment capacity)
   - We cannot slow down the process too much. Ammonia and chlorine steams have to stay encapsulated as dissociated ions or stabilised as salts, or they have to leave the reactor's space to avoid negative diffusion.
      We cannot speed up the process too much. Processes and reactions will not be completed and we will lose quality. This can also prevent the desired transformation of the final product.

Quality of the final product determines the speed of the process. Calculation of energy balance tells us about needed treatment capacity. If we do not need solidificate as the final product, then the energy shortage can be solved by using heat released during its regeneration, temperatures of hot air being≈ 600 °C.

After we establish all parameters, process is continuous and mostly uninterrupted. We need to control temperatures in all reactors' lines as well as temperature of output product, and temperature of exiting gases and water steam.

Properly constructed counter stream heat exchange system will increase warming of waste. Temperature of input waste can be 10-15% lower than temperature of gases and steam exiting reactors' lines. This depends on insulation of heat exchangers as well as length of the pipeline.

In practice, optimal temperatures are:
- for gases and steam exiting reactors' lines approximately 90 °C
- for input waste approximately 75 °C
- around the injector of ozone on waste approximately 65 °C

By reintroducing the attained solidificate, whose temperature is about 75 °C, back into the process, we level the mixture's heat energy and stabilise the process without losing much energy. Final solidificate exiting the process (E), besides being so-called Neutral, also has the heat required for following transformations:
- silicate conglomeration (HR/P20100300)
- gascement (HR/P20100325)

We need stabilisation, drying, evaporation and cooling only when it comes to Neutral of standard quality. Neutral is put into bags and transported to another location to be utilised (Patent Applications by same Author HR/P200100575A; HR/P20090092A).

Treatment is cost-effective because we harmonise all energy values in different phases of the process and utilise energy obtained through that same process.

We can illustrate this by using data that appears most often in practice.
a) Average composition of waste (as mixture of communal and industrial mud)

| Data 1 | Data 2 | Data 3 | Data 4 |
|---|---|---|---|
| 1. Moisture | B. Alkaline metals | 15. TOC | 22. Physical properties of all input material |
| 2. pH | 9. Chlorine | 16. NH₄⁺ | |
| 3. Conductivity | 10. Sulphur | 17. CN⁻ | |
| 4. Organic portion | 11. Phenols | 18. Particles, ash | |
| 5. Hard metals | 12. AOX | 19. Solubility | 23. Physical properties of all products of treatment |
| 6. Total nitrogen | 13. PAH | 20. KPK | |
| 7. Total phosphorus | 14. PCB | 21. BPK 5 | |

b) Overall energy of the process

| Energy source | Calculation and values |
|---|---|
| Outside conditions (temperature, moisture, altitude, pressure) | *T_{Outside} (°C); Moisture of air %;* |
| | *h* = *m* / *above sea level;* |
| | *p* ≤ *pₐ (kp*/*cm²); T_{Average}*=*∑(T₁+T₂)*/*2; E_{Loss}* |
| Input material (caloric value of waste) | *HHV, LHV; dU=dQ* + *dW* |
| | *E_{LHV}*=*1*/*2 ε*·*H_{LHV}*·*G_{Ory substance} (MJ*/*kg)* |
| Attained solidificate (heat energy, the remaining CaO that did not react) | *E*=*G cₚ ΔT* |
| | *E_{AT}*=*0.3·H_{LHV}·0.5* (*G_{Ory subst}* +*G_{Moisium})*+ *E_{Esothermic}(MJ*/*kg)* |
| Magnetic ionisation (increased energy of chemical reaction), Inductivity L | *Tₘ*=*B*=*φ*/*A*=*µH*=*µₒµᵣH* |
| | *L*=*wφ*/*I; W_{L}*=*0, 5 L I²* |
| Vacuum energy (ionic dissociation, energy of gases) | *V_{w}*=*4dP; G*=*8Wₛχ; J*=*m²;* |
| | *C*_{Chemical}=1/2*mv²*; *P_{Potential}*=*8mₘv²;* |
| | *A*=*Wᵣa*/*v²* |
| | *E_{w}*=*3,6 Eₘ*/*q (MJ*/*kg)* |
| Decomposition (exothermic energy, enthalpy) | CaO+H₂O→Ca(OH)₂ - 1,18 *(MJ*/*kg)* |
| | *Hₘ*=*Eₘₒₗ°K (MJ*/*kmol°K)* |
| | *hₓ*=*h'*+*x(h"-h') (MJ*/*kg)* |
| Ozonation (decomposition of organic substances) | *ΔH°* = 143 *kJ*/*mol* |
| | *S°*=239 *J*/*°K mol* |
| Ultrasound (energy effect of homogenisation) | f = 50-500 *kHz* |
| | *Anaerobic* stabilisation of mud |
| Solar Panel | *E_{Solar}*=*ηEₛ ·Aₛ* · *t₂*/*t₁- qₗ* |
| Counter stream heat exchangers for steam and gases | *E_{each}*=*ηEₚ ·Aₚ- Qₗ* |

Process thermodynamics accept data regarding electronegativity (EN) as well as electrochemical potential (ECP) of molecules and compounds.

For reactant Ca²⁺: EN = 1, and ECP = -2.76.

Savings on reactant CaO are >25% and the quality of output product meets the requirements for further transformation of solidificate.

Best results are achieved with 25% of CaO when treating the following sorts of waste:
- Mud from filters for waste waters:≈ 26%
- Industrial mud:≈ 19%
- Concentrated seeped waste waters at communal waste dumps (landfill leaching): ≈ 30%

Results concerning the quality of final product:
a) Standard solidificate (Neutral)
   - TTT balance (time-temperature-transformation): 17.5 weight% CaO for treatment capacity of 7 m³/h.
   - Dissociation and encapsulation reach severalfold increase
   - Average temperature of output steam and gases: 92 °C
   - Savings, difference in spent energy: 28.5%
b) Solidificate intended for silicate conglomeration
   - TTT balance: 14.8 weight% CaO for treatment capacity of about 6.7 m³/h
   - Dissociation and encapsulation are in anticipated amounts
   - Average temperature of output steam and gases: 88 °C
   - Savings, difference in spent energy: 22.5%
c) Solidificate intended for gascement
   - TTT balance: 16.2 weight% CaO for treatment capacity of about 5.5 m³/h
   - Dissociation and encapsulation are in anticipated amounts
   - Average temperature of output steam and gases: 81 °C
   - Savings, difference in spent energy: 29.5%
d) Regeneration of solidificate, where our goal is to obtain calcium oxide needed for further continuous treatment of waste. Final product is ash in amount of 3-7 weight%. Ash collects:
   - As sediment in water filter (≈ 2%)
   - As a powder in cyclone (≈ 2 %)
   - In scrubber (≈ 2 %)
      Overall, the total amount of ash is in cyclone since the sedimentary ashes in filters are returned back into the process.

### PREFERRED EMBODIMENTS:

1. Facility for treatment of waste with choice of quality of output products,
   characterised by the fact, that communal or industrial waste (A) is taken by transporter (1), treated by heat injector (2), ultrasound device for homogenisation (2a) and ozone generator (3) as it undergoes physical and chemical process which includes parallel dissociation devices (6), device for creation of magnetic field (6a), parallel oxide encapsulators (12), parallel reduction encapsulators (16) and parallel redox encapsulators (20).
2. Facility for treatment of waste according to embodiment 1, characterised by the fact, that creation and preservation of heat is conducted by heat extractors from reactors' lines (⁷). (14), (18) and (21), as well as heat collection system for all reactors' units (26), tower with exchange and distribution of heat (27), accumulation directing device for heat (28) with insulated pipeline for heat placed towards incoming waste (29) and including solar panel for absorption of the sun's energy (30) and heat exchanger (39) of hot air from regenerator's rotary kiln (36) while the minimal amount of ash is collected in collector (41).
3. Process for treatment of waste with choice of quality of output products,
   characterised by the fact, that physical and chemical shaping of solidificate is done accordingly to solidificate's intended use, whether it is a solidificate-Neutral, solidificate for silicate conglomeration, solidificate for gascement or solidificate for obtaining calcium oxide with minimal amount of ash left in collector (41).
4. Process for treatment of waste with choice of quality of output products,
   characterised by the fact, that heat energy needed for successful dissociation, encapsulation and solidification is obtained by exothermic chemical reaction of calcium oxide, as well as with heat extractors from reactors' lines (7), (14), (21), heat from the sun (30) and regenerator's heat exchanger (39), which create heat energy needed for molecular distribution and pozzolamic reaction, which in turn create CaHSi primary agent for tightening of molecules into solid form of crystal adsorption.
5. Process for treatment of waste with choice of quality of output products,
   characterised by the fact, that heat energy is distributed by heat injector (2), heat collection system for all reactors' units (26), tower with exchange and distribution of heat (27) and accumulation directing device for heat (28), and so the process gains the necessary heat for high quality output product (E), meaning special sorts of solidificate: solidificate-Neutral, solidificate for silicate conglomeration, solidificate for gascement or solidificate for obtaining calcium oxide.
6. Process for treatment of waste with choice of quality of output products,
   characterised by the fact, that all chemical reactions happen faster and more completely with ultrasound device for homogenisation (2a) and ozone generator (3) that decomposes organic fraction, while the high level of mixture's ozonation is achieved by parallel dissociation devices with magnetic field (6), (6a), parallel oxide encapsulators (12), parallel reduction encapsulators (16) and parallel redox encapsulators (20) with which we help create chemical incorporation, sorption and inclusive precipitation.

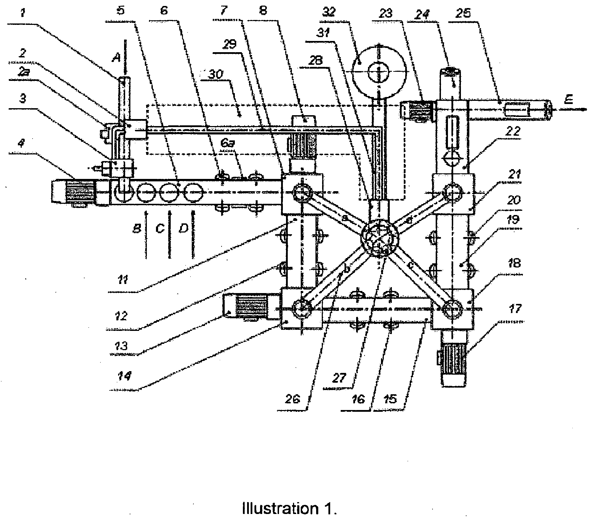

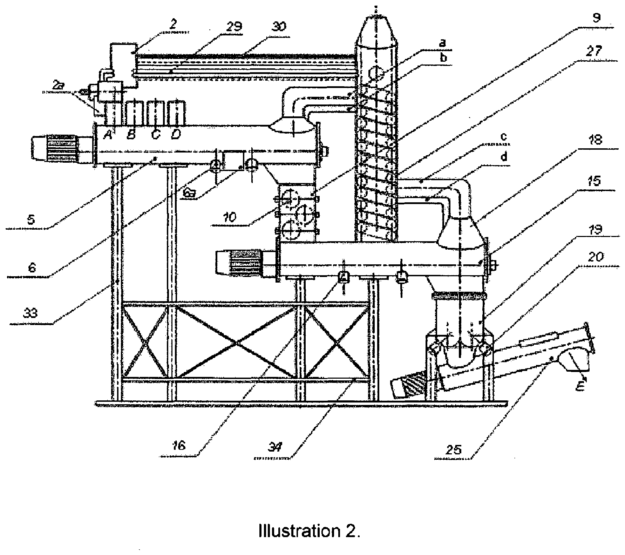

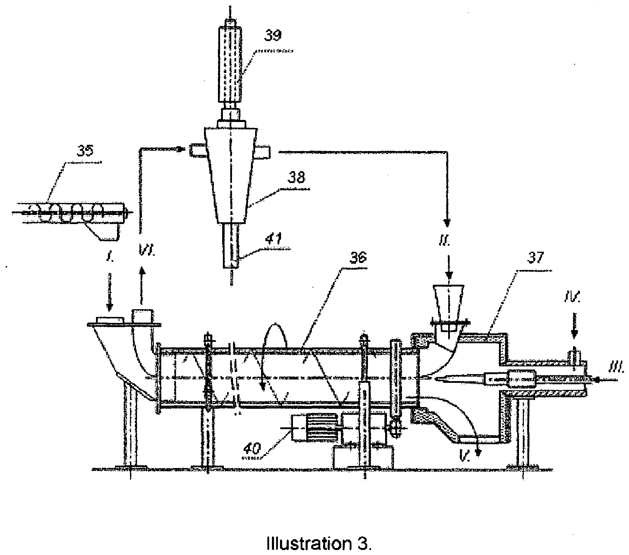

## Claims

1. Regenerator for transforming a solidificate containing Ca(OH)₂, CaCO₃, Ca(OH)₂ + MgCO₃ and a rest into calcium oxide, comprising:
a rotary kiln (36) for roasting the solidificate and thereby separating steam and the gaseous contents from the remaining content and obtaining calcium oxide, the rotary kiln (36) having
an entry (I) for the solidificate,
an exit for the calcium oxide obtained in the rotary kiln (36), and
an exit (VI) for hot air containing the steam and the gaseous contents;
a motor (40) for the rotary kiln (36);
a burner (37) for providing the rotary kiln (36) with the roasting temperature, the burner (37) comprising
an entry (II) for hot air from a cyclone (38),
an entry (III) for fuel,
an entry (IV) for fresh air,
an entry connected to the exit for calcium oxide of the rotary kiln (36), and
an exit (V) for the calcium oxide;
a cyclone (38) having
an entry, which is in flow connection with the exit (VI) for hot air containing the steam and gaseous contents of the rotary kiln (36), the steam and the gaseous contents going through the cyclone (38) into a filtering unit to be cleansed,
an ash collector (41) for collecting the ash left in the cyclone (38),
a first exit for hot air, which is in flow connection with the entry of (II) for hot air of the burner (37),
a second exit for hot air, which is in flow connection with an entry for hot air of a heat exchanger (39),
a heat exchanger (39) which is in flow connection with the second exit for hot air of the cyclone (38).

2. Regenerator according to claim 1, **characterized by** a transporter (35) for taking the solidificate into the rotary kiln (36).

3. Regenerator according to claim 1 or 2, **characterized by** a conveyor or pneumatic pipe line for transporting the calcium oxide into a silo.

4. Process for transforming a solidificate containing 63 % Ca(OH)₂, 24 % CaCO₃, 8.5 % Ca(OH)₂ + MgCO₃ and 4.5 % rest into calcium oxide, comprising the following steps:
providing a regenerator according to anyone of the claim 1 to 3;
roasting the solidificate in a rotary kiln (36), thereby separating steam and the gaseous contents from the remaining content and obtaining calcium oxide;
providing the rotary kiln (36) with the roasting temperature by a burner (37) supplied with hot air from a cyclone (38) and with fuel and fresh air;
discharging the calcium oxide from the rotary kiln (36) via the burner (37),
supplying the cyclone (38) with hot air from the rotary kiln (36), the hot air containing the steam and the gaseous contents and going through the cyclone (38) into a filtering unit to be cleansed;
supplying the burner (37) with a first part of the hot air from the cyclone (38);
supplying a heat exchanger (39) with a second part of the hot air from the cyclone (38); and
collecting the ash left in the cyclone (38) by an ash collector (41).

5. Process according to claim 4, **characterized by** the further step of taking the solidificate by a transporter (35) into the rotary kiln (36).

6. Process according to claim 4 or 5, **characterized by** the further step of transporting the calcium oxide by a conveyor or pneumatic pipeline into a silo.

## Patentansprüche

1. Regenerator zur Umwandlung eines Solidifikats, das Ca(OH)₂, CaCO₃, Ca(OH)₂ + MgCO₃ und einen Rest enthält, in Calciumoxid, mit:
einem Drehrohrofen (36) zum Rösten des Solidifikats und dadurch zum Trennen von Dampf und den gasförmigen Inhaltsstoffen von dem übrigen Inhalt und zum Gewinnen von Calciumoxid, wobei der Drehrohrofen (36) Folgendes besitzt:
einen Einlass (I) für das Solidifikat,
einen Auslass für das in dem Drehrohrofen (36) gewonnene Calciumoxid, und
einen Auslass (VI) für Heißluft, die den Dampf und die gasförmigen Inhaltsstoffe enthält;
einem Motor (40) für den Drehrohrofen (36);
einem Brenner (37), um den Drehrohrofen (36) auf die Rösttemperatur zu bringen, wobei der Brenner (37) Folgendes aufweist:
einen Einlass (II) für Heißluft aus einem Zyklon (38),
einen Einlass (III) für Brennstoff,
einen Einlass (IV) für Frischluft,
einen Einlass, der mit dem Calciumoxid-Auslass des Drehrohrofens (36) verbunden ist, und
einen Auslass (V) für das Calciumoxid;
einem Zyklon (38) mit
einem Einlass, der mit dem Auslass (VI) für den Dampf und die gasförmigen Inhaltsstoffe des Drehrohrofens (36) enthaltende Heißluft in Strömungsverbindung steht, wobei der Dampf und die gasförmigen Inhaltsstoffe durch den Zyklon (38) in eine Filtereinheit gelangen, um gereinigt zu werden,
einem Aschesammler (41) zum Sammeln der in dem Zyklon (38) verbliebenen Asche,
einem ersten Heißluftauslass, der mit dem Heißlufteinlass (II) des Brenners (37) in Strömungsverbindung steht,
einem zweiten Heißluftauslass, der mit einem Heißlufteinlass eines Wärmetauschers (39) in Strömungsverbindung steht,
einem Wärmetauscher (39), der mit dem zweiten Heißluftauslass des Zyklons (38) in Strömungsverbindung steht.

2. Regenerator nach Anspruch 1, **gekennzeichnet durch** eine Transportvorrichtung (35) zum Einbringen des Solidifikats in den Drehrohrofen (36).

3. Regenerator nach Anspruch 1 oder 2, **gekennzeichnet durch** eine Fördervorrichtung oder pneumatische Rohrleitung zum Transport des Calciumoxids in ein Silo.

4. Verfahren zur Umwandlung eines Solidifikats, das 63% Ca(OH)₂, 24% CaCO₃, 8,5% Ca(OH)₂ + MgCO₃ und 4,5% Rest enthält, in Calciumoxid, mit den folgenden Schritten:
Bereitstellen eines Regenerators nach einem der Ansprüche 1 bis 3;
Rösten des Solidifikats in einem Drehrohrofen (36), wodurch Dampf und die gasförmigen Inhaltsstoffe vom übrigen Inhalt getrennt werden und Calciumoxid gewonnen wird;
Beaufschlagen des Drehrohrofens (36) mit der Rösttemperatur durch einen Brenner (37), dem Heißluft aus einem Zyklon (38) sowie Brennstoff und Frischluft zugeführt werden;
Abführen des Calciumoxids aus dem Drehrohrofen (36) über den Brenner (37),
Zuführen von Heißluft aus dem Drehrohrofen (36) zu dem Zyklon (38), wobei die Heißluft den Dampf und die gasförmigen Inhaltsstoffe enthält und durch den Zyklon (38) in eine Filtereinheit gelangt, um gereinigt zu werden;
Zuführen eines ersten Teils der Heißluft aus dem Zyklon (38) zu dem Brenner (37);
Zuführen eines zweiten Teils der Heißluft aus dem Zyklon (38) zu einem Wärmetauscher (39); und
Sammeln der in dem Zyklon (38) verbliebenen Asche durch einen Aschesammler (41).

5. Verfahren nach Anspruch 4, **gekennzeichnet durch** einen weiteren Schritt, bei dem das Solidifikat über eine Transportvorrichtung (35) in den Drehrohrofen (36) gelangt.

6. Verfahren nach Anspruch 4 oder 5, **gekennzeichnet durch** den weiteren Schritt des Transports des Calciumoxids über eine Fördervorrichtung oder eine pneumatische Rohrleitung in ein Silo.

## Revendications

1. Régénérateur destiné à transformer un solidificat contenant Ca(OH)₂, CACO₃, CA(OH)₂ + MgCO₃ et un reste en oxyde de calcium, comprenant :
un four rotatif (36) destiné à griller le solidificat pour ainsi séparer la vapeur et les contenus gazeux hors du contenu restant et obtenir de l'oxyde de calcium, le four rotatif (36) ayant
une entrée (I) pour le solidificat,
une sortie pour l'oxyde de calcium obtenu dans le four rotatif (36), et
une sortie (VI) pour l'air chaud contenant la vapeur et les contenus gazeux ;
un moteur (40) pour le four rotatif (36) ;
un brûleur (37) destiné à assurer la température de grillage dans le four rotatif (36), le brûleur (37) comprenant
une entrée (II) pour l'air chaud provenant d'un cyclone (38),
une entrée (III) pour du combustible,
une entrée (IV) pour de l'air neuf,
une entrée connectée à la sortie pour l'oxyde de calcium du four rotatif (36), et
une sortie (V) pour l'oxyde de calcium ;
un cyclone (38) ayant
une entrée qui est en connexion d'écoulement avec la sortie (VI) pour l'air chaud contenant la vapeur et les contenus gazeux du four rotatif (36), la vapeur et les contenus gazeux passant à travers le cyclone (38) jusque dans une unité de filtrage pour être nettoyés,
un collecteur de cendres (41) destiné à collecter les cendres laissées dans le cyclone (38),
une première sortie pour l'air chaud qui est en connexion d'écoulement avec l'entrée (II) pour l'air chaud du brûleur (37),
une seconde sortie pour l'air chaud qui est en connexion d'écoulement avec une entrée pour l'air chaud d'un échangeur de chaleur (39),
un échangeur de chaleur (39) qui est en connexion d'écoulement avec la seconde sortie pour l'air chaud du cyclone (38).

2. Régénérateur selon la revendication 1, **caractérisé par** un transporteur (35) destiné à admettre le solidificat jusque dans le four rotatif (36).

3. Régénérateur selon la revendication 1 ou 2, **caractérisé par** un convoyeur ou une ligne à tube pneumatique destiné(e) à transporter l'oxyde de calcium jusque dans un silo.

4. Procédé pour transformer un solidificat contenant 63 % de Ca(OH)₂, 24 % de CACO₃, 8,5 % de CA(OH)₂ + MgCO₃ et 4,5 % de reste en oxyde de calcium, comprenant les étapes consistant à :
fournir un régénérateur selon l'une quelconque des revendications 1 à 3 ;
griller le solidificat dans un four rotatif (36) pour ainsi séparer la vapeur et les contenus gazeux hors du contenu restant et obtenir de l'oxyde de calcium ;
assurer la température de grillage dans le four rotatif (36) au moyen d'un brûleur (37) alimenté avec de l'air chaud provenant d'un cyclone (38) et avec du carburant et de l'air neuf ;
évacuer l'oxyde de calcium hors du four rotatif (36) via le brûleur (37), alimenter le cyclone (38) avec l'air chaud provenant du four rotatif (36), l'air chaud contenant la vapeur et les contenus gazeux et passant à travers le cyclone (38) jusque dans une unité de filtrage pour être nettoyé ;
alimenter le brûleur (37) avec une première partie de l'air chaud provenant du cyclone (38) ;
alimenter un échangeur de chaleur (39) avec une seconde partie de l'air chaud provenant du cyclone (38) ; et
collecter les cendres laissées dans le cyclone (38) au moyen d'un collecteur de cendres (41).

5. Procédé selon la revendication 4, **caractérisé par** l'étape supplémentaire consistant à admettre le solidificat moyen d'un transporteur (35) jusque dans le four rotatif (36).

6. Procédé selon la revendication 4 ou 5, **caractérisé par** l'étape supplémentaire consistant à transporter l'oxyde de calcium au moyen d'un convoyeur ou d'une ligne à tube pneumatique jusque dans un silo.
